# EUROPEAN PATENT SPECIFICATION

(11) **EP 1 299 180 B1**
(45) Date of publication and mention of the grant of the patent: **09.03.2005**
(21) Application number: 00945773.0
(22) Date of filing: 19.06.2000
(51) Int. Cl.: B01J 8/00, B01J 8/18, B01J 8/24

(54) **REACTOR HAVING BELLOWS EXPANSION UNIT BETWEEN CATALYST ADDITION/WITHDRAWAL CONDUIT AND GRID PLATE**
REAKTOR MIT DEHNBAREM BALG ZWISCHEN KATALYSATOR-ZUGABEROHR, BZW. ABZUGSROHR UND GITTERPLATTE
REACTEUR COMPRENANT UNE UNITE D'EXPANSION EN SOUFFLET MONTEE ENTRE UN CONDUIT D'AJOUT/ENLEVEMENT DE CATALYSEUR ET UNE GRILLE-PLAQUE

(43) Date of publication of application: 09.04.2003
(73) Proprietor: Institut Français du Pétrole, 92852 Rueil-Malmaison Cedex (FR)
(72) Inventor: KAO, Y., Thomas, Voorhees, NJ 08043 (US)
(86) International application number: PCT/EP2000/005630
(87) International publication number: WO 2001/097959

(56) References cited:
- US-A- 3 561 274
- US-A- 3 957 419
- US-A- 4 426 958

## Description

### BACKGROUND OF INVENTION

This invention pertains to fluidized bed type catalytic reactors. It pertains particularly to such reactors having an addition/withdrawal conduit for particulate catalyst extending through a flow distribution grid plate located in the reactor lower portion, with the conduit being sealably attached to the grid plate by a bellows type expansion unit.

A known pressurizable ebullated bed catalytic reactor adapted for operation at elevated temperature and pressure conditions and having a lower grid plate for supporting a bed of particulate catalyst, with the grid plate containing multiple riser tubes each covered by a bubble cap for upward fluid flow is generally disclosed by U.S. Patent No. 3,475,134 to Weber et al. Particulate catalyst is periodically added to and withdrawn from the reactor ebullated bed through an elongated conduit extending upwardly through the reactor lower head and through the grid plate. From past operating experience, such conduits have been a problem because they sometimes fail prematurely near the grid plate due to severe erosion by the randomly moving catalyst particles in the ebullated bed. Such erosion by the catalyst particles is apparently caused by hydrogen gas passing at high velocity through gaps which sometimes occur in a split flange type seal which is usually used around the conduit above the grid plate, for permitting necessary vertical thermal expansion movement of the conduit relative to the grid plate. Because of these undesired erosion problems in such reactors, an improved configuration for sealably attaching the catalyst addition/withdrawal conduit to the reactor grid plate is needed.

### SUMMARY OF INVENTION

This invention provides a pressurizable fluidized bed catalytic reactor having an innovative construction for sealably attaching an elongated catalyst addition/withdrawal conduit to a flow distribution grid plate in the reactor lower portion, by providing a concentric bellows type expansion unit located adjacent to the outside surface of the conduit portion which protrudes through the grid plate and into the reactor catalyst bed. The invention includes the pressurizable reactor vessel having the grid plate fixedly mounted transversely in the reactor lower portion for supporting a bed of particulate catalyst, and arranged for upward fluid flow distribution therethrough. The reactor has the elongated catalyst addition/withdrawal conduit extending through the reactor lower head and upwardly through the grid plate into the catalyst bed, and a concentric bellows unit is sealably attached at its lower end to the grid plate and is sealably attached at the bellows unit upper end to the conduit. The reactor is adapted for sustained operation at elevated temperature of 316-755°C (600-900°F) and pressure of 35.4-207 bar (500-3000 psig). The bellows unit of this invention is suitable to accommodate both radial and vertical thermal expansion of the elongated conduit relative to the grid plate.

The bellows type expansion unit configuration of this invention advantageously provides a flexible and reliable sealing means around the catalyst addition/withdrawal conduit portion extending above the grid plate. The bellows unit cost can be traded off against the cost of a previously used split flange joint sealing arrangement for which undesired erosion problems have been experienced.

### BRIEF DESCRIPTION OF DRAWINGS

This invention will be described further with reference to the following drawings, in which:
Fig. 1 shows a partial cross-sectional elevation view of a fluidized bed catalytic reactor having an elongated conduit extending upwardly through the reactor grid plate for catalyst addition/withdrawal and including a bellows unit located above the grid plate according to the invention; and
Fig. 2 shows an enlarged cross-sectional elevation view of a reactor grid plate with a conduit extending upwardly through the grid plate and pressure sealed by a bellows unit configuration according to the invention.

### DESCRIPTION OF INVENTION

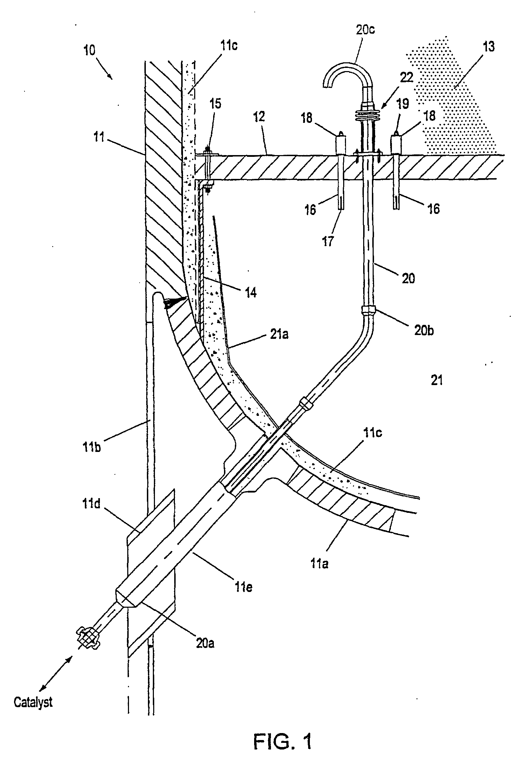

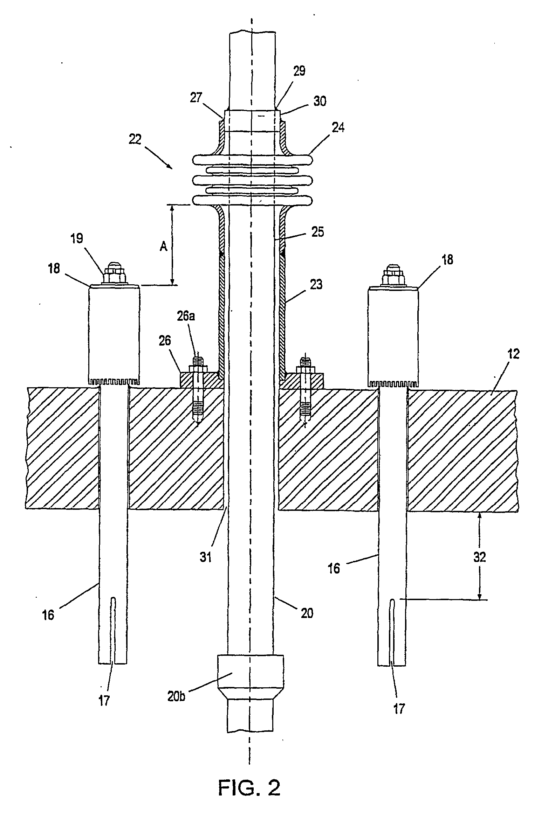

As shown by Figs. 1 and 2, a vertically-oriented pressurizable ebullated bed type catalytic reactor vessel 10 includes a cylindrical-shaped wall 11, a lower hemispherical head 11a welded pressure-tightly onto the wall and a reactor support skirt 11b. The reactor 10 may have an inner thermal insulation layer 11c provided against the cylindrical wall 11 and head 11a. The reactor has a grid plate 12 fixedly mounted transversely in the reactor lower portion for upward fluid flow distribution into a catalyst bed 13. The grid plate 12 is sealably attached to the reactor bottom head 11a by a cylindrical shaped support skirt ring 14 and a circumferential bolted joint 15, and supports the particulate catalyst bed 13 located above the grid plate 12. Multiple riser tubes 16 are provided extending vertically through the grid plate 12 for upward uniform flow of gas and liquid, each tube having its lower end slotted at 17 and its upper end portion covered by a bubble cap 18, fixedly attached to the tube 16 by a bolt and nut at 19.

An elongated conduit 20 for catalyst addition/withdrawal from catalyst bed 13 extends from outside the reactor 10 through opening 11d in the support skirt 11b, and is attached pressure-tightly at 20a to an elongated sleeve 11e which is attached pressure tightly at its upper end to the reactor lower head 11a. The conduit 20 extends upwardly through a plenum space 21 which is lined by a metal casing 21a and through the grid plate 12. The conduit 20 may include at least one coupling joint 20b, and may have an upper return bend 20c shaped for substantially excluding catalyst particles in the bed 13 from entering the conduit, except during any particulate catalyst withdrawal operations from the bed.

The catalyst addition/withdrawal conduit 20 which enters the reactor 10 through the lower head 11a will become elongated towards the center of the reactor and upwards towards the top of the reactor as the reactor reaches its normal high temperature operation conditions. Because there is usually inadequate space for providing an expansion loop in the conduit 20 within the plenum space 21 below the grid plate 12, this arrangement requires that the conduit 20 be able to slide vertically relative to the grid plate 12. An expansion bellows unit 22 which is provided sealably attached to the conduit 20 will not only seal off any possible gas or catalyst leakage through the grid plate 12 and around the conduit 20, but it will also provide for thermal expansion of the catalyst addition/withdrawal conduit 20 relative to the reactor wall 11 and head 11a and the grid plate 12. Such thermal expansion occurs during reactor startup operations while the reactor reaches its usual operating condition of 316-755°C (600-900°F) temperature and 35.4-207 bar (500-3000 psig) pressure.

As best shown by Fig. 2, the concentric bellows unit 22 includes an elongated outer sleeve element 23 sealably attached to a bellows element 24 and surrounds that portion of the conduit 20 located immediately above the grid plate 12. The lower end of the bellows element 24 should be located above the bubble caps 18 by a distance "A" of at least 7.62 cm (3 inches), and need not exceed 30.5 cm (12 inches). The elongated outer sleeve 23 and the bellows element 24 of the bellows unit 22 of this invention each have an inner diameter slightly larger than the outer diameter of the protruding conduit 20, so as to provide an annular clearance space 25 between the conduit 20 and sleeve 23 to permit necessary axial movement of the conduit 20 relative to the grid plate 12. The clearance space 25 should have a radial clearance of at least about 3.05 mm (0.12 inch) to accommodate radial thermal expansions, and the radial clearance need not exceed about 7.62 cm (0.30 inch). The outer sleeve 23 is attached pressure-tightly at its lower end to the upper surface of the reactor grid plate 12 by means of a bolted flange 26 and stud bolts and nuts 26a. The bellows element 24 is attached pressure-tightly at its upper end to the outside diameter of the conduit 20 by a seal weld 27. Alternatively if desired, the bellows 24 may be seal welded at 27 to a reinforcing collar ring 30, with the collar being seal welded at 29 to the conduit 20. Also, a lower annular clearance space 31 is provided between the grid plate 12 and the conduit 20 similar to the upper clearance space 25.

During operations of the catalytic reactor 10, the bellows expansion unit 22 will be loaded in tension and will not encounter any problems from catalyst accumulation from bed 13 at the outside of the bellows element 24. During such reactor operations, the lower annular space 31 provided between the grid plate 12 and the annular space 25 inside the bellows unit 22 and the outside surface of the conduit 20 will be filled with hydrogen gas from a gas buffer zone 32 provided below the grid plate 12 and above the riser tube gas entry slots 17, so that there will be no undesired coke formation in these annular spaces during reactor extended operations. During such operations, the pressure within annular space 25 will exceed the pressure in ebullated bed 13 by a differential pressure of 0.69-2.76 bar (10 - 40 psi) and preferably by 1.03-2.07 bar (15 - 30 psi) differential pressure. The bellows element 24 is suitable for accommodating the differential pressure, and also provides a vertical movement for the conduit 20 relative to the grid plate 12 of 2.54-7.62 cm (1- 3 inches).

With this reactor design improvement for the addition/withdrawal conduit 20, the multiple riser tubes 16 and attached bubble caps 18 located above the grid plate 12 will provide better liquid and vapor flow distribution from the plenum space 21 upwardly into the catalyst bed 13, and there will be less potential for coking in the catalyst bed due to any undesired short circuit of hydrogen gas passage through the split-flange type seal which was previously used around the conduit 20.

If desired, the reactor 10 may have two separate catalyst addition/ withdrawal conduits extending upwardly through the grid plate 12, the first conduit 20 being for catalyst addition upwardly into the fluidized bed 13, and a second conduit 40 provided for catalyst withdrawal downwardly from the fluidized bed 13. Each separate conduit 20 and 40 extending through the grid plate 12 is provided with a bellows unit 22 attached pressure-tightly at its lower end to the grid plate 12, and attached at its upper end pressure-tightly to each conduit similarly as described above. Also, the catalyst addition conduit 20 has its upper end terminated at a level above the upper end of catalyst withdrawal conduit 40.

This invention will be further described by a typical construction example, which should not be construed as limiting in its scope.

### EXAMPLE

A vertically-oriented catalytic reactor is provided having a bed of particulate catalyst supported above a flow distribution grid plate located in the reactor lower portion. An elongated conduit for catalyst addition/withdrawal extends upwardly through the reactor lower head and the grid plate, and is sealably attached to the grid plate upper side by a bellows unit. Important dimensions and relationships for the reactor and the bellows unit are as follows:

| | |
|---|---|
| Reactor outside diameter m, (ft.) | 4.57 (15) |
| Reactor wall thickness cm, (in.) | 20.3 (8) |
| Reactor operating temperature °C, (°F) | 371 - 427 (700 - 800) |
| Reactor operating pressure bar, (psig) | 138 (2000) |
| Grid plate thickness cm, (in.) | 30.5 (12) |
| Conduit outside diameter cm, (in.) | 7.62 (3) |
| Bellows and sleeve inside diameter cm, (in.) | 8.9 (3.5) |
| Radial clearance between conduit and b ellows mm, (in.) | 6.35 (0.25) |
| Vertical movement of conduit relative to grid plate cm, (in.) | 5.08 (2) |
| Vertical distance (A) between bubble caps and bellow cm, in. | 15.2 (6) |
| Catalyst particle size mm, (in.) | 0.762 - 1.52 (0.030 - 0.060) |

Because the bellows unit is sealably attached at its lower end to the grid plate and is sealably attached at its upper end to the catalyst addition/withdrawal conduit, the conduit has adequate horizontal and vertical movement relative to the grid plate, and hydrogen gas leakage from below the grid plate around the conduit is prevented.

Although this invention has been described broadly and also includes a preferred embodiment, it will be understood that modifications and variations can be made within the scope of the invention which is defined by the following claims.

## Claims

1. A pressurizable vertically-oriented reactor vessel assembly having a cylindrical-shaped wall attached to a lower head and having a flow distribution grid plate fixedly attached transversely within the reactor lower portion for supporting a bed of particulate catalyst, the grid plate containing multiple riser tubes each covered at its upper end by a cap, the reactor vessel further comprising:
at least one elongated conduit attached pressure-tightly at its lower end to the reactor lower head and extending upwardly through the reactor lower head and the grid plate; and
a concentric bellows unit sealably attached at its lower end to the grid plate upper side, and sealably attached at its upper end to the outside surface of said elongated conduit, whereby during reactor operations at elevated temperatures the elongated conduit can expand upwardly relative to the grid plate, particulate catalyst can be passed through the elongated conduit into the catalyst bed, and gas cannot pass around the conduit and upwardly through the grid plate.

2. The reactor vessel assembly according to Claim 1, wherein said bellows unit includes a lower sleeve element sealably attached to the grid plate and an upper bellows element sealably attached to said conduit.

3. The reactor vessel assembly according to Claim 1, wherein said bellows unit has an inner diameter sufficiently larger than the conduit outer diameter to provide a radial clearance of 3.05 - 7.62 mm (0.12 - 0.30 inch) said bellows unit being attached at its lower end to the grid plate by a flange bolted onto the grid plate upper side.

4. The reactor vessel assembly according to Claim 1, wherein the bellows element is located 7.62 - 30.5 cm (3-12 inches) above caps for the multiple riser tubes of said grid plate.

5. The reactor vessel assembly according to Claim 1, wherein said elongated conduit is attached at its lower end to an elongated sleeve portion of the reactor lower head.

6. The reactor vessel assembly according to Claim 1, wherein said bellows unit provides for a differential pressure of 0.69 - 2.76 bar (10 - 40 psi).

7. The reactor vessel according to Claim 1, wherein said bellows unit provides for a vertical movement for said conduit of 2.54 - 7.62 cm (1-3 inches).

8. The reactor vessel assembly according to Claim 1, wherein two separate elongated conduits are provided each sealably attached to the reactor lower head and grid plate, a first conduit being for catalyst addition into a space above the grid plate and a second conduit being for catalyst withdrawal from the space above the grid plate.

9. The reactor vessel assembly according to Claim 7, wherein said first elongated conduit for catalyst addition has an upper end which terminates at a level above that for the second elongated conduit for catalyst withdrawal.

10. A pressurizable vertically-oriented reactor vessel assembly having a cylindrical wall attached to a lower head and having a flow distribution grid plate fixedly attached transversely within the reactor lower portion for supporting a bed of particulate catalyst, the grid plate containing multiple riser tubes each covered at its upper end by a cap, the reactor vessel further comprising:
two elongated conduits each attached pressure-tightly at its lower end to the reactor lower head and extending upwardly through the reactor lower head and the grid plate into the catalyst bed; and
two concentric bellows units sealably attached at its lower end to the grid plate upper side by means of a bolted flange, and each bellows unit sealably attached at the bellows unit upper end to each said elongated conduit outer surface, whereby during reactor operations at elevated temperatures each elongated conduit can extend upwardly relative to the grid plate and particulate catalyst material can be passed through one said elongated conduit into the catalyst bed and catalyst withdrawn from the catalyst bed through the other said elongated conduit, and gas cannot pass around either conduit and through the grid plate.

## Patentansprüche

1. Druckbeaufschlagbare, vertikal ausgerichtete Reaktorgefäßanordnung mit einer zylinderförmigen Wand, angebracht an einem unteren Kopf und mit einer Strömungsverteiler-Gitterplatte, die fest quer in dem Reaktor im unteren Teil befestigt ist, um ein Bett eines speziellen Katalysators zu tragen, wobei die Gitterplatte mehrere Aufstiegsrohre enthält, die an ihrem oberen Ende durch eine Kappe bedeckt sind, wobei das Reaktorgefäß weiterhin umfasst:
wenigstens eine längliche Leitung, die druckdicht an ihrem unteren Ende an dem unteren Reaktorkopf befestigt ist und sich nach oben durch den unteren Reaktorkopf und die Gitterplatte erstreckt; und
eine konzentrische Gebläseeinheit, die dichtend an dem unteren Ende der Gitterplattenoberseite befestigt ist und dichtend an ihrem oberen Ende der Außenoberfläche der länglichen Leitung befestigt ist, wobei bei Reaktorbetrieben bei erhöhten Temperaturen die längliche Leitung nach oben in Bezug zu der Gitterplatte sich ausstrecken kann, der spezielle Katalysator durch die längliche Leitung in das Katalysatorbett geführt werden kann und Gas nicht um die Leitung und nach oben durch die Gitterplatte laufen kann.

2. Reaktorgefäßanordnung nach Anspruch 1, worin die Gebläseeinheit ein unteres Hülsenelement umfasst, das dichtend an der Gitterplatte befestigt ist und ein oberes Gebläseelement, das dichtend an der Leitung befestigt ist.

3. Reaktorgefäßanordnung nach Anspruch 1, worin die Gebläseeinheit einen genügend breiteren Innendurchmesser als den Außenleitungsdurchmesser hat, um ein radiales Spiel von 3,05 bis 7,62 mm (0,12 bis 0,30 Inch) zu ergeben, wobei die Gebläseeinheit an ihrem unteren Ende an die Gitterplatte durch ein mit Bolzen an der Gitterplattenoberseite befestigtes Flansch befestigt ist.

4. Reaktorgefäßanordnung nach Anspruch 1, worin das Gebläseelement 7,62 bis 30,5 cm (3 bis 12 Inch) über den Kappen für die vielfachen Aufstiegsrohre der Gitterplatten angeordnet ist.

5. Reaktorgefäßanordnung nach Anspruch 1, worin die längliche Leitung an ihrem unteren Ende an dem länglichen Hülsenteil des Reaktorkopfs befestigt ist.

6. Reaktorgefäßanordnung nach Anspruch 1, worin die Gebläseeinheit eine Druckdifferenz von 0,69 bis 2,76 bar (10 bis 40 psi) ergibt.

7. Reaktorgefäßanordnung nach Anspruch 1, worin die Gebläseeinheit eine vertikale Bewegung für die Leitung von 2,54 bis 7,62 cm (1 bis 3 Inch) ergibt.

8. Reaktorgefäßanordnung nach Anspruch 1, worin zwei getrennte längliche Leitungen jeweils dichtend an dem unteren Reaktorkopf und der Gitterplatte befestigt sind, wobei eine erste Leitung zur Katalysatorzugabe in einem Raum über der Gitterplatte da ist und eine zweite zur Katalysatorentfernung aus dem Raum über der Gitterplatte.

9. Reaktorgefäßanordnung nach Anspruch 7, worin die erste längliche Leitung zur Katalysatorzugabe ein oberes Ende hat, das auf einem Niveau über jenem für die zweite längliche Leitung zur Katalysatorentfernung endet.

10. Druckbeaufschlagbare, vertikal ausgerichtete Reaktorgefäßanordnung mit einer zylindrischen Wand, befestigt an einem unteren Kopf und mit einer Strömungsverteilergitterplatte, die fest quer in dem unteren Reaktorteil zum Tragen eines Betts eines bestimmten Katalysators angeordnet ist, wobei die Gitterplatte mehrere Aufstiegsrohre hat, die jedes an seinem oberen Ende mit einer Kappe bedeckt sind, wobei das Reaktorgefäß weiterhin umfasst:
zwei längliche Leitungen, wobei jede druckdicht an ihrem unteren Ende an dem unteren Reaktorkopf befestigt ist und sich nach oben durch den unteren Reaktorkopf und die Gitterplatte in das Katalysatorbett erstreckt; und
zwei konzentrische Gebläseeinheiten, dichtend an ihrem unteren Ende an der Gitterplattenoberseite durch ein mit Bolzen befestigtes Flansch befestigt sind und jede Gebläseeinheit dichtend an dem oberen Gebläseeinheitenende an jeder Außenfläche der länglichen Leitung befestigt ist, wobei sich bei Reaktorbetrieben bei erhöhten Temperaturen jede längliche Leitung nach oben in Bezug auf die Gitterplatte erstrecken kann und spezielles Katalysatormaterial durch eine der länglichen Leitungen in das Katalysatorbett geführt werden kann und Katalysator aus dem Katalysatorbett durch die andere genannte längliche Leitung entfernt werden kann und Gas nicht um jede Leitung und über die Gitterplatte laufen kann.

## Revendications

1. Enceinte réactionnelle pressurisable orientée verticalement, comportant une paroi de forme cylindrique fixée à une tête inférieure et une plaque-grille de répartition d'écoulement fixée transversalement au sein de la partie inférieure du réacteur, destinée à soutenir un lit de particules catalytiques, la plaque-grille contenant de multiples conduites montantes dont l'extrémité supérieure est recouverte d'un couvercle, l'enceinte réactionnelle comprenant en outre :
- au moins un conduit allongé fixé de manière étanche à la pression, à son extrémité inférieure, à la tête inférieure du réacteur et s'étendant vers le haut à travers la tête inférieure du réacteur et la plaque-grille,
- un soufflet concentrique fixé de manière étanche, à son extrémité inférieure, au côté supérieur de la plaque-grille, et fixé de manière étanche, à son extrémité supérieure, à la surface extérieure dudit conduit allongé, le conduit allongé pouvant se dilater vers le haut par rapport à la plaque-grille lors du fonctionnement du réacteur à température élevée, les particules catalytiques pouvant être amenées dans le lit catalytique en passant à travers le conduit allongé, sans qu'il y ait possibilité de passage de gaz autour du conduit et en sens ascendant à travers la plaque-grille.

2. Enceinte réactionnelle selon la revendication 1, dans laquelle ledit soufflet comporte un élément de manchon inférieur fixé de manière étanche à la plaque-grille et un élément de soufflet supérieur fixé de manière étanche audit conduit.

3. Enceinte réactionnelle selon la revendication 1, dans laquelle ledit soufflet présente un diamètre intérieur de dimension suffisamment supérieure à celle du conduit :
diamètre extérieur permettant d'avoir un jeu radial de 3,05-7,62 mm (0,12-0,30 pouces),
ledit soufflet étant fixé, à son extrémité inférieure, à la plaque-grille par une bride boulonnée sur le côté supérieur de la plaque-grille.

4. Enceinte réactionnelle selon la revendication 1, dans laquelle l'élément de soufflet est situé à une distance de 7,62-30,5 cm (3-12 pouces) au-dessus des couvercles des multiples conduites montantes de ladite plaque-grille.

5. Enceinte réactionnelle selon la revendication 1, dans laquelle ledit conduit allongé est fixé, à son extrémité inférieure, à une portion de manchon allongée de la tête inférieure du réacteur.

6. Enceinte réactionnelle selon la revendication 1, dans laquelle ledit soufflet fournit une pression différentielle de 0,69-2,76 bars (10-40 psi).

7. Enceinte réactionnelle selon la revendication 1, dans laquelle ledit soufflet fournit un mouvement vertical dudit conduit de 2,54-7,62 cm (1-3 pouces).

8. Enceinte réactionnelle selon la revendication 1, dans laquelle deux conduits allongés séparés sont fixés de manière étanche à la tête inférieure du réacteur et à la plaque-grille, un premier conduit servant à l'ajout de catalyseur dans un espace situé au-dessus de la plaque-grille et un second conduit servant à l'évacuation du catalyseur contenu dans l'espace situé au-dessus de la plaque-grille.

9. Enceinte réactionnelle selon la revendication 7, dans laquelle le premier conduit allongé servant à l'ajout de catalyseur présente une extrémité supérieure qui se termine à un niveau situé au-dessus de celui du second conduit allongé servant à l'évacuation du catalyseur.

10. Enceinte réactionnelle pressurisable orientée verticalement, comportant une paroi cylindrique fixée à une tête inférieure et une plaque-grille de répartition d'écoulement fixée transversalement au sein de la partie inférieure du réacteur, destinée à soutenir un lit de particules catalytiques, la plaque-grille contenant de multiples conduites montantes dont l'extrémité supérieure est recouverte d'un couvercle, l'enceinte réactionnelle comprenant en outre :
- deux conduits allongés fixés de manière étanche à la pression, à leur extrémité inférieure, à la tête inférieure du réacteur et s'étendant vers le haut à travers la tête inférieure du réacteur et la plaque-grille dans le lit catalytique,
- deux soufflets concentriques fixés de manière étanche, à leur extrémité inférieure, au côté supérieur de la plaque-grille au moyen d'une bride boulonnée, et fixés de manière étanche, à leur extrémité supérieure, à la surface extérieure de chacun desdits conduits allongés, chaque conduit allongé pouvant s'étendre vers le haut par rapport à la plaque-grille lors du fonctionnement du réacteur à température élevée, les particules catalytiques pouvant être amenées dans le lit catalytique en passant à travers l'un desdits conduits allongés et les particules catalytiques pouvant être évacuées du lit catalytique à travers l'autre desdits conduits allongés, sans qu'il y ait possibilité de passage de gaz autour d'aucun des conduits et à travers la plaque-grille.
